Europäisches Patentamt

European Patent Office

Office européen des brevets

(11) Publication number: **0 473 185 A1**

## EUROPEAN PATENT APPLICATION

(21) Application number: **91114620.7**

(22) Date of filing: **30.08.91**

(51) Int. Cl.⁵: **A23L 1/182**, A23L 1/10

(30) Priority: **30.08.90 JP 229694/90**

(43) Date of publication of application:
**04.03.92 Bulletin 92/10**

(84) Designated Contracting States:
**BE DE FR GB IT NL SE**

(71) Applicant: **TERUMO KABUSHIKI KAISHA**
**No. 44-1, Hatagaya 2-chome, Shibuya-ku**
**Tokyo 151(JP)**

(72) Inventor: **Kameyama, Toshiki**
**c/o Terumo K. K., 1727-1, Tsuijiarai,**
**Showa-cho**
**Nakakoma-gun, Yamanashi-ken(JP)**
Inventor: **Shibata, Michiyo**
**c/o Terumo K. K., 1727-1, Tsuijiarai,**
**Showa-cho**
**Nakakoma-gun, Yamanashi-ken(JP)**

(74) Representative: **Casalonga, Alain**
**BUREAU D.A. CASALONGA - JOSSE**
**Morassistrasse 8**
**W-8000 München 5(DE)**

(54) **Boiled rice modifying agent, modified boiled rice, modified rice and the method of preparing modified boiled rice.**

(57) This invention relates to a boiled rice modifying agent which makes it possible to cook boiled rice more slowly digested and absorbed than unmodified boiled rice, modified boiled rice, modified rice, and the method of cooking the modified boiled rice. The boiled rice modifying agent comprises an edible amphipatic fatty acid compound and an edible moisture-retaining substance and the ratio of the fatty acid compound to the moisture-retaining substance is 100 : 10-200. The modified boiled rice has an edible amphipatic fatty acid compound bound gelatinized grains and further an edible moisture-retaining substance adhered to the grains bound by the fatty acid compound. The modified rice has an edible amphipatic fatty acid compound and an edible moisture-retaining substance adhered to grains.

FIELD OF THE INVENTION

This invention relates to a boiled rice modifying agent, modified boiled rice, modified rice and the method of cooking the modified boiled rice, and particularly to a boiled rice modifying agent which makes it possible to cook boiled rice more slowly digested and absorbed than unmodified boiled rice by just adding to rice when cooking, modified boiled rice cooked using the modifying agent, modified rice prepared for cooking beforehand using the modifying agent, and the method of cooking the modified boiled rice using the modifying agent.

BACKGROUND OF THE INVENTION

Today in developed societies people suffered from obesity are rapidly increasing because of enriched eating habits. People with a higher obesity index are two or three times more liable to diabetes, arterial sclerosis and hart disease. Diseases deeply related to obesity such as gout, complication after surgery, cholelithiasis, lumbago and hepatic disease are also increasing steadily. Obesity is thus becoming a serious problem from the viewpoint of health care.

As a method for curing and preventing obesity, conventionally reduction of caloric intake is employed. However, since the detach method of just reducing the quantity of food is very hard to stick to because of a strong feeling of hunger, the following methods are taken simultaneously.

One of them is to reduce the capacity of the stomach of patients by putting a balloon in the stomach or blocking most part of the stomach so that a little amount of food intake can invoke a mechanical stretching stimulus to the stomach. However, this method is not desirable because it is a permanent measure which requires surgery and has some fear of possible side effects.

The other method is to let patients ingest bulk-increasing substances such as dietary fiber or glutinousness-enhancing substances by themselves or by mixture with food. This method is intended to decrease the caloric content per unit weight of food. However, dietary fiber is hard to eat by itself in a large quantity, since it tastes bad and has bad texture in the mouth. When added to food, it mostly deteriorates the taste and texture of the food. Moreover, intake of a large quantity of dietary fiber is not desirable because it can cause side effects as hindering absorption of other nutrients and causing diarrhea or constipation. Further, it is difficult to eat such food with dietary fiber added to as a staple for races living on rice as Japanese from the viewpoint of eating habits.

SUMMARY OF THE INVENTION

The object of the present invention is to provide a boiled rice modifying agent, boiled rice, modified rice and the method for making the modified rice and boiled rice. The modified rice of the present invention can be cooked by usual cooking and eaten as a staple food. The boiled rice of the present invention is more slowly digested and absorbed and thereby makes it possible to effectively prevent or ameriolete obesity without the above methods of preventing and curing obesity. Further, it can prevent an abrupt rise of blood sugar and hence suited for diabetics.

The above object can be attained by a boiled rice modifying agent of the present invention which comprises at least an edible amphipatic fatty acid compound and an edible moisture-retaining substance in the ratio of the fatty acid compound to the moisture-retaining substance of 100 : 10-200 by weight.

The above object can also be attained by a boiled rice of the present invention which comprises gelatinized grains, at least an edible amphipatic fatty acid compound bound the grains and at least an edible moisture-retaining substance adhered to the grains bound by the fatty acid compound.

The above object can also be attained by a modified rice of the present invention which comprises grains, at least an edible amphipatic fatty acid compound adhered to the grains and an edible moisture-retaining substance adhered to the grains.

The above object can also be attained by the method of the present invention for cooking the modified rice which heats 100 parts by weight of rice, 50-1,000 parts by weight of water, and the modifying agent of such a quantity as the amphipatic fatty acid compound in the modifying agent is 0.1-5 parts by weight, above such a temperature as the amphipatic fatty acid compound in the modifying agent binds the rice.

DETAILED DESCRIPTION

First the boiled rice modifying agent of the present invention is described below using an embodiment.

The boiled rice modifying agent of the present invention comprises at least an edible amphipatic fatty acid compound and an edible moisture-retaining substance in the ratio of the fatty acid compound to the moisture-retaining substance of 100 : 10-200 by weight.

For foodstuffs intended for eating with a low moisture content such as cereal, addition of a fatty acid compound (glycerol mono-fatty acid ester, for example) does not cause so much problem on the taste and feeling. But for those intended for eating with a high moisture content such as rice for eating boiled, the fatty acid compound bound starch can stimulate the sense of taste in the presence of water contained by the foodstuffs and deteriorate the taste and feeling of the foodstuff.

However, the modifying agent of the present invention has the following effects. By just boiling rice as usual with the modifying agent added, a fatty acid compound in the agent binds the rice to slow down digestion and absorption. This modified rice therefore has the effect in preventing and curing obesity. It can also prevent an abrupt rise of blood sugar and hence suited for diabetics. In addition, the edible water-holding substance prevents the deterioration of the taste and feeling due to the addition of a fatty acid compound by masking the fatty acid bound rice. Moreover, it diminishes excessive fluffiness (little tendency to cohere) of boiled rice caused by the addition of a fatty acid compound by maintaining a moderate moisture content.

Preferable fatty acids for the component of the edible amphipatic fatty acid compound used for the modifying agent of the present invention are those with the number of carbon atoms from 8-22, which include caprylic acid, pelargon acid, capric acid, undecyl acid, lauric acid, tridecyl, myristic acid, pentadecyl acid, palmitic acid, heptadecyl acid, stearic acid, nanodecanoic acid, arachic acid, behenic acid, undecylen acid, oleic acid, elaidic acid, cetoleic acid, erucic acid, brasilin acid, linolic acid, linolenic acid and arachidonic acid. For salts of fatty acids, sodium salt, potassium salt and magnesium salt of the above fatty acids are preferable. Preferable fatty acid compounds are esters of fatty acids, and the alcohol donors for the esters are glycerol, propylene glycol and polypropylene glycol, saccharides (sucrose, maltose, etc.), sugar alcohol (sorbite, mannite, erythritol, etc.) and glycerolin acid. The edible amphipatic fatty acid compound is preferably an ester of glyceroe and fatty acid. To enumerate specifically, esters of glycerol and fatty acids (decaglycerylmonolaurate, decaglycerylmonomyristate, hexaglycerylmonostearate, de-caglycerylmonostearate, monoglycerylmonostearate, decaglyceryldistearate, decaglyceryltristearate, de-caglycerylmonooleate, decaglyceryltrioleate, hexaglycerylmonooleate, decaglycerylpentaoleate, etc.), esters of sucrose and fatty acids (sucrostearate, sucropalmitate, sucrooleate, sucrolaurate, sucrobehenate, etc.), esters of sorbitan and fatty acids (sorbitanmonolaurate, sorbitanmonostearate, sorbitanmonooleate, etc.), and phospholipid (lecithin, lysolecithin, etc.) are preferably usable. These fatty acid esters may have any range of HLB (Hydrophilic Lipophilic Balance).

It is thought that the edible amphipatic fatty acid compound in the modifying agent of the present invention binds the amylose portion of starch, the amylose bound by fatty acid compound takes a form in which formation of a complex with enzymes is difficult, and the starch then does not easily receive the action of enzymes such as amylase, resulting in a slower digestion and absorption.

For the edible moisture-retaining substance used for the modifying agent of the present invention, such substances as to be edible and have a certain moisture-retaining property are preferable. To enumerate specifically, gelatin, collagen, dextrin, starch binders, guaic gum, locust bean gum and pectin such as thickener, carrageenin, alginic acid and gelatinizer such as agar are preferably usable. It is also preferable that the edible moisture-retaining substance has a certain coating property. The edible moisture-retaining substance, by having a coating property, can better diminish deterioration of the taste and suppress the action of enzymes such as amylase.

The modifying agent of the present invention is prepared by adding a moisture-retaining substance (gelatin, for example) to an amphipatic fatty acid compound in the form of powder and mixing them. It is preferable to blend the mixture into an emulsion by emulsifying using a hydrophilic solvent by means of a homogenizer.

The ratio of the amphipatic fatty acid compound and the moisture-retaining substance of this modifying agent is appropriately selected within the range of 100 : 10-200 by weight. If the quantity of the moisture-retaining substance is below 10 parts (by weight) to 100 parts of the fatty acid compound, the fatty acid compound (glycerol mono-fatty acid ester, for example) bound the rice grains boiled with this modifying agent is not adequately masked and there rises a problem with the taste. On the other hand, if the quantity of the moisture-retaining substance is above 200 parts, boiled rice is too cohesive and the natural taste of rice is deteriorated. A preferable range of the moisture-retaining substance is 30-70 parts to 100 parts of the fatty acid compound.

Next described is the second modifying agent of the present invention.

This second modifying agent comprises at least an edible amphipatic fatty acid compound and an edible moisture-retaining substance and glycerol tri-fatty acid ester in the ratio of the amphipatic fatty acid compound to the edible moisture-retaining substance to the glycerol tri-fatty acid ester of 100 : 50-200 : 3-3,000 by weight.

This modifying agent contains glycerol tri-fatty acid ester in addition to the components of the above first agent and thereby can better diminish unnatural taste and flavor of boiled rice caused by the addition of the modifying agent.

For the edible amphipatic fatty acid compound and the edible moisture-retaining substance, the same substances as those for the first modifying agent can be used preferably.

The glycerol tri-fatty acid ester used for the second modifying agent may be a single glycerol tri-fatty acid ester or a mixture of glycerol tri-fatty acid esters, made synthetically or obtained by refining various types of fat or oil, but is preferably edible fat and oil. Olive oil, coconut oil, rapeseed oil, corn oil, soybean oil, rice bran oil, rice oil, safflower oil, sunflower oil, wheat germ oil, palm oil or their mixture are enumerated as edible fat or oil for example. Rice bran oil is preferable.

This modifying agent is prepared by adding a moisture-retaining substance (gelatin, for example) and a glycerol tri-fatty acid ester (rice bran oil, for example) to an amphipatic fatty acid compound (glycerol mono-fatty acid) in powder and mixing them (method 1). It is preferable to blend the mixture into an emulsion by emulsifying using a hydrophilic solvent by means of a homogenizer.

This modifying agent can also be prepared by the following methods.

The second method hydrolyzes an edible fat and oil using a catalyst such as a hydroxide of alkali metal into a mixture of glycerol tri-fatty acid ester, glycerol mono-fatty acid ester, glycerol di-fatty acid ester and free fatty acids, then adds a moisture-retaining substance to the mixture (method 2).

The third method adds glycerol to fat and oil, transesterifies the mixture into a mixture of glycerol tri-fatty acid ester, glycerol mono-fatty acid ester, glycerol di-fatty acid ester and free fatty acids, then adds a moisture-retaining substance to the mixture (method 3). Since the free fatty acids resulted from hydrolysis react on the added glycerol to form glycerol mono-fatty acid ester and the quantity of free fatty acids in the modifying agent decreases, this method can prepare a modifying agent exceeding that prepared by the above second method in not deteriorating the natural taste of rice.

The fourth method hydrolyzes fat and oil using an enzyme (lipase, for example) into a mixture of glycerol tri-fatty acid ester, glycerol mono-fatty acid ester, glycerol di-fatty acid ester and free fatty acids, then adds a moisture-retaining substance to the mixture (method 4).

The fifth method adds glycerol and an enzyme (lipase, for example) to fat and oil and thereby causes hydrolysis by the enzyme and transesterification simultaneously (hereinafter referred to as lipase-transesterification). By making the free fatty acids resulted from hydrolysis bind the added glycerol to form glycerol mono-fatty acid ester, this method can prepare a modifying agent with less free fatty acids and more glycerol mono-fatty acid ester (method 5). The modifying agent prepared by this fifth method thus exceeds that prepared by the fourth method in not deteriorating the natural taste of rice.

There is no limitation on lipase used as the enzyme in the above methods for preparing the modifying agent, and pancreatic lipase, Pseudomonas Fluorescens, Chromobacterium Viscosum, Rhizopu Japonicus, Candida Cylindracea and Aspergillus Nigar, for example, are usable.

When simply hydrolyzing fat and oil using an enzyme (method 4), the modifying agent can be prepared by adding to the fat and oil an emulsifier about 2-5 times the quantity of the fat and oil, agitating the mixture violently to make a fatty acid emulsion, then adding an enzyme of about 0.02-0.01 parts to the emulsion and reacting them at about 35-45 °c for about 0.1-60 hours, and finally adding a moisture-retaining substance. As the reaction time elapses, decomposition of glycerol tri-fatty acid progresses and the quantity of resultant glycerol mono-fatty acid ester increases accordingly. However, the quantity of free fatty acids also increase simultaneously. Therefore, the reaction time is preferably within 60 hours.

When employing the lipase-transesterification, the modifying agent can be prepared by adding 2-10 parts lipase and 1-5 parts water to 100 parts glycerol and thereafter adding 200 -1,000 parts fat and oil to the mixture, then reacting them for about 20-100 hours, and finally adding a moisture-retaining substance. Water is added to activate the enzymatic activity of the enzyme. However, addition of more than 5 parts of water can cause excessive hydrolysis. Therefore, the quantity of water is preferably equal to or less than 5 parts. The preferable reaction temperature is about 0-50 °c, though it varies depending on the type of lipase and fat and oil used.

The ratio of the fatty acid compound, the moisture-retaining substance and glycerol tri-fatty acid ester of the second modifying agent is appropriately selected within the range of 100 : 10-200 : 3-300 by weight. The quantity of the moisture-retaining substance is determined for the same reasons as those for the first modifying agent. If the quantity of glycerol tri-fatty acid ester is above 3 parts to 100 parts of the fatty acid compound, unpleasant taste and smell are sufficiently diminished. On the other hand, if the quantity of glycerol tri-fatty acid ester is above 3,000 parts to 100 parts of the fatty acid compound, boiled rice becomes oily. A preferable range of glycerol tri-fatty acid ester is 3-200 (the ratio of the three components is 100 : 10-70 : 3-200). Taking the moisture-retaining capability into consideration, a more preferable range is 5-150 (100 : 10-70 : 5-150), and particularly preferable range is 5-20 (100 : 10-70 : 5-20).

Next described is the boiled rice of the present invention. The boiled rice of the present invention has gelatinized grains, with an edible amphipatic fatty acid compound bound the grains, and with an edible moisture-retaining substance adhered to the grains bound by the fatty acid compound.

For the amphipatic fatty acid compound and the moisture-retaining substance, the substances described above are usable. It is preferable that the amphipatic fatty acid compound and the moisture-retaining substance are added in the ratio 100 : 10-200 by weight. The quantity of the amphipatic fatty acid compound added to rice (most fatty acid compound is thought to bind) is preferably 0.1-5 parts to 100 parts of rice. With the fatty acid compound within this range of quantity, the digestion and absorption of the boiled rice can be slowed down sufficiently. The quantity of the moisture-retaining substance (quantity of adhering) is preferably 0.1-10 parts to 100 parts of rice. With the moisture-relating substance within this range of quantity, the deterioration of the flavor of the boiled rice can be diminished and the excessive moisture content of the boiled rice can be prevented.

For the binding ratio of starch and the amphipatic fatty acid compound in the boiled rice, the rate of the amylose in starch occupied by the fatty acid compound is preferably greater than 10% and particularly 40-95%, though it varies depending on the types of fatty acid compound used and the preparing conditions. If the rate of the amylose in starch occupied by glycerol mono-fatty acid ester is above 10%, the speed of digestion and absorption can be slowed down sufficiently. Here, "the rate of the amylose in starch occupied by a fatty acid compound" is a value calculated from the iodine affinity (the amount of amylose-iodine binding) measured by amperometric titration. An iodine affinity allows the estimation of an amylose content utilizing the iodine property of binding amylose to form a complex. However, the iodine affinity becomes smaller for the starch treated with a fatty acid compound as of the modified rice of the present invention than for untreated starch, by the rate of the amylose bound by the fatty acid compound (does not bind iodine). Then the rate of the amylose in starch occupied by the fatty acid compound (%) is calculated by subtracting the iodine affinity of processed starch from that of unprocessed starch, dividing the remainder by the iodine affinity of unprocessed starch, and multiplying the quotient by 100.

$$\text{Rate of amylose occupied by a fatty acid compound (\%)} = \frac{\text{Affinity of unprocessed starchy material for iodine} - \text{Affinity of processed starchy material for iodine}}{\text{Affinity of unprocessed starchy material for iodine}} \times 100$$

Next described is the second boiled rice of the present invention.

The second boiled rice of the present invention has gelatinized grains with an edible amphipatic fatty acid compound bound the grains and at least an edible moisture-retaining substance and glycerol tri-fatty acid ester adhered to the grains bound by the fatty acid compound.

This second boiled rice, with glycerol tri-fatty acid ester further adhered to the above first boiled rice, has a better flavor.

For the amphipatic fatty acid compound, the moisture-retaining substance and glycerol tri-fatty acid ester, the substances described above are usable. It is preferable that the fatty acid compound, the moisture-retaining substance and glycerol tri-fatty acid ester are added in the ratio 100 : 50-200 : 3-3,000 by weight.

Further, the rate of the amylose occupied by the fatty acid compound is preferably greater than 10% and pratically 40-95%.

The modified boiled rice of the present invention has a reduced enzyme-digestive efficiency by amylase compared to normal boiled rice, and hence the digestion and absorption speed is significantly slowed down. It is thus suitable for an antiobesity foodstuff and a foodstuff for diabetics. It can be eaten in various forms of food such as plain boiled rice, pilaf and rice gruel. It can be further processed into freeze-dried boiled rice, retort packed and so on. Moreover, the modified boiled rice of the present invention can be used for animals other than man.

Next, the method of cooking the boiled rice of the present invention is described below.

The method of the present invention blends the 100 parts of rice grains, 50-1,000 parts of water and such a quantity of the above modifying agent as the amphipatic fatty acid compound in it is 0.1-5 parts to the rice grains, and then heats the mixture at such a temperature as the amphipatic fatty acid compound in the modifying agent can bind the rice grains.

Specifically, rice grains are first subjected to contact with the above modifying agent comprising an amphipatic fatty acid compound and a moisture-retaining substance and as necessary glycerol tri-fatty acid ester in the presence of water. This treatment is carried out, for example, by adding glycerol mono-fatty acid (amphipatic fatty acid compound) ester dissolved or dispersed in water beforehand to the rice grains and thereby putting the rice starch and glycerol mono-fatty acid ester into contact in the presence of water. The quantity of water, though it varies depending on the type of the amphipatic fatty acid compound used and water, is desired to be 50 -200 parts to 100 parts of rice grains.

The rice grains are then boiled by heating to make the amphipatic fatty acid compound bind the rice grains. The heating temperature is preferably about 60-70 ° c.

The water remaining after the above process is removed by an appropriate drying method such as freeze drying, vacuum drying and air drying.

Further, rice grains and the fatty acid compound can also be brought into contact in the presence of water by adding the modifying agent to the rice grains dispersed in water beforehand or by putting the rice grains and the modifying agent into water simultaneously.

Next described below is the modified rice of the present invention.

The modified rice of the present invention comprises grains, at least an edible amphipatic fatty acid compound and an edible moisture-retaining substance adhered to the grains.

When this modified rice is boiled, the rice grains are gelatinized, the fatty acid binds the gelatinized grains, and the moisture-retaining substance adheres to the grains bound by the fatty acid compound.

For the amphipatic fatty acid compound and the moisture-retaining substance, the substances described above are usable. It is preferable that the amphipatic fatty acid compound and the moisture-retaining substance adhered to rice grains is in the ratio 100 : 10-200 by weight. The quantity of the amphipatic fatty acid compound added to rice (most fatty acid compound is thought to bind when the rice is boiled) is preferably 0.1-5 parts to 100 parts of rice. With the fatty acid compound within this range of quantity, the digestion and absorption of the boiled rice can be slowed down sufficiently. The quantity of the moisture-retaining substance (quantity of adhering) is preferably 0.1-10 parts to 100 parts of rice. With the moisture-relating substance within this range of quantity, the deterioration of the flavor of the boiled rice can be diminished and the excessive moisture content of the boiled rice is prevented.

The second modified rice of the present invention conprises grains, at least an edible amphipatic fatty acid compound and an edible moisture-retaining substance and glycerol tri-fatty acid ester adhered to the grains.

This second modified rice, with glycerol tri-fatty acid ester further adhered to the first modified rice, has a better flavor than the first modified rice.

For the amphipatic fatty acid compound, the moisture-retaining substance and glycerol fatty acid ester, the substances described above are usable. It is preferable that the fatty acid compound, the moisture-retaining substance and glycerol tri-fatty acid ester adhered to rice grains are in the ratio 100 : 10-200 : 3-3,000 by weight.

The method of making the modified rice of the present invention dips rice grains in the modifying agent emulsified and separated in a solvent, pulls out the rice grains after a predetermined time, and dries it. By this process, rice grains to which a fatty acid compound and a moisture-retaining agent and as necessary glycerol tri-fatty acid ester are adhered can be obtained.

Specifically, rice grains are first subjected to contact with the above modifying agent comprising an amphipatic fatty acid compound and a moisture-retaining substance and as necessary glycerol tri-fatty acid ester in the presence of a solvent. This treatment is carried out, for example, by adding glycerol mono-fatty acid ester dissolved or dispersed in a solvent beforehand to the rice grains and thereby putting the rice starch and glycerol mono-fatty acid ester into contact in the presence of a solvent. The solvent is used to bring the rice grains and the amphipatic fatty acid compound into contact with each other equally and effectively. Preferable for this purpose are solvents which are hydrophilic so as to readily wet rice grains and can disperse the amphipatic fatty acid compound homogeneously. Specifically, an appropriate solvent can be selected from water, alcohol, glycerol, alkylene glycol, acetone or a mixture of more than one of them, for example, according to the property of the amphipatic fatty acid compound. The quantity of the solvent, though it varies depending on the type of amphipatic fatty acid compound and solvent used, is preferably 50-200 parts to 100 parts of rice. After letting the modifying agent adhere to the rice grains, remaining solvent is removed by an appropriate method such as freeze drying, vacuum drying and air drying.

Further, rice grains and the fatty acid compound can also be brought into contact in the presence of a solvent by adding the modifying agent to the rice grains dispersed in the solvent beforehand or by putting the rice grains and the modifying agent into the solvent simultaneously.

EXAMPLES

Example 1

This example of the modifying agent of the present invention (example 1) is prepared by mixing 1,000 g glycerol mono-stearic acid ester (EMALGEE-MS, Riken Vitamin Co., Ltd.) and 500 g gelatin (E1-1017, Nippi Inc.).

Example 2

This example of the modifying agent of the present invention (example 2) is prepared by mixing 1,000 g glycerol mono-stearic acid ester (EMALGEE-MS, Riken Vitamin Co., Ltd.) and 1,000 g of gelatin (E1-1017, Nippi Inc.).

Example 3

This example of the modifying agent of the present invention (example 3) is prepared by mixing 1,000 g glycerol mono-stearic acid ester (EMALGEE-MS, Riken Vitamin Co., Ltd.) and 110 g gelatin (E1-1017, Nippi Inc.).

Example 4

This example of the modifying agent of the present invention (example 4) is prepared by mixing 1,000 g glycerol mono-stearic acid ester (EMALGEE-MS, Riken Vitamin Co., Ltd.) and 1,900 g gelatin (E1-1017, Nippi Inc.).

Example 5

This example of the modifying agent of the present invention (example 5) is prepared by mixing 1,000 g glycerol mono-stearic acid ester (EMALGEE-MS, Riken Vitamin Co., Ltd.), 500 g gelatin (E1-1017, Nippi Inc.) and 100 g refined rice bran oil (Fuji Oil Co., Ltd.).

Example 6

This example of the modifying agent of the present invention (example 6) is prepared by mixing 1,000 g glycerol mono-stearic acid ester (EMALGEE-MS, Riken Vitamin Co., Ltd.), 1,000 g gelatin (E1-1017, Nippi Inc.) and 1,000 g refined rice bran oil (Fuji Oil Co., Ltd.).

Example 7

This example of the modifying agent of the present invention (example 7) is prepared by mixing 1,000 g glycerol mono-stearic acid ester (EMALGEE-MS, Riken Vitamine Co., Ltd.), 2,000 g gelatin (E1-1017, Nippi Inc.) and 500 g refined rice bran oil (Fuji Oil Co., Ltd.).

Example 8

This example of the modifying agent of the present invention (example 8) is prepared by mixing 1000 g sucrose stearic acid ester (Ryoto Sugar Ester S-1570, Mitsubishi Chemical Corp.)and 1000g gelatin (E1-1017, Nippi Inc.).

Example 9

This example of the modifying agent of the present invention (example 9) is prepared by mixing 1,000 g glycerol mono-stearic acid ester (EMALGEE-MS, Riken Vitamin Co., Ltd.) and 500 g carrageenin (SOAGEENA MV-101, Mitsubishi Rayon Co., Ltd.).

Example 10

This example of the modifying agent of the present invention (example 10) is prepared by mixing 1,000 g glycerol mono-stearic acid ester (EMALGEE-MS, Riken Vitamin Co., Ltd.) and 500 g guaiac gum (GUAPACK PN-1, Nippon Industries Ltd.).

Example 11

14.2 g lipase (Pseudomonas Fluorescens, from Amano Inc.) and 8.8 g water were added to 284 g glycerol (water content 0.6%, Wako Pure Chemical Industries Ltd.) and the mixture was agitated. Then 1,307 g rice bran oil soled on the market was added to the mixture and the mixture was left to react at 30 °c for 45 hours. The composition of the resultant product was as follows.

| glycerol tri-fatty acid ester | 20.3 wt% |
|---|---|
| glycerol di-fatty acid ester | 41.3 wt% |
| glycerol mono-fatty acid ester | 32.9 wt% |
| free fatty acid | 3.1 wt% |
| Others | 2.4 wt% |

Further added to the above product was 530 g gelatin (E1-1017, Nippi Inc.) and they were mixed to obtain the modifying agent of the present invention (example 11). The composition of this modifying agent was as follows.

| glycerol tri-fatty acid ester | 15.2 wt% |
|---|---|
| glycerol di-fatty acid ester | 31.0 wt% |
| glycerol mono-fatty acid ester | 24.7 wt% |
| free fatty acid | 2.3 wt% |
| gelatin | 25.0 wt% |
| Others | 1.8 wt% |

The component ratio of the product of the lipase reaction was measured by the following method.
Chloroform of 5 ml was added to 0.5 ml the product of the lipase reaction and they were agitated well. The solution was then centrifuged at 3,000 rpm for 20 min and the chloroform layer was dried up by a current of nitrogen. The residue was dissolved again in 3 ml chloroform and the component ratio was measured from the solution using an thin layer automatic detector (IATROSCAN, IATRON Laboratories Inc.).

Example 12

The lipase hydrolysis was carried out in the same manner as example 11 using Chromobacterium Viscosum (Tyoyo Jozo Co., Ltd.) instead of Pseudomonas Fluorescens as lipase. The composition of the resultant product was as follows.

| glycerol tri-fatty acid ester | 19.8 wt% |
|---|---|
| glycerol di-fatty acid ester | 40.7 wt% |
| glycerol mono-fatty acid ester | 33.6 wt% |
| free fatty acid | 3.3 wt% |
| Others | 2.6 wt% |

Further added to the above product was 530 g gelatin (E1-1017, Nippi Inc.) and they were mixed to obtain the modifying agent of the present invention (example 12). The composition of this modifying agent was as follows.

| glycerol tri-fatty acid ester | 14.9 wt% |
|---|---|
| glycerol di-fatty acid ester | 30.5 wt% |
| glycerol mono-fatty acid ester | 25.2 wt% |
| free fatty acid | 2.5 wt% |
| gelatin | 25.0 wt% |
| Others | 1.9 wt% |

Example 13

1% sucrose stearic acid ester (Ryoto Sugar Ester S-1570, Mitsubishi Chemical Corp.) solution 76 g was added to 24 g olive oil soled on the market and they were agitated violently by means of an agitator at 8,000 rpm for 3 min to emulsify. Added to this oil and fat emulsion were 0.1 M phosphoric acid buffer solution (pH 7.0) 15 g and then 5 g Rhizopus lipase (LIPASE F "AMANO" AP15, Amano kabushikikaisha), and the emulsion was left to react at 40 °c for 40 hours. After the reaction was completed, the product was heated in a boiling water bath for 10 min to deactivate the lipase and then cooled to a room temperature. The composition of the product resulted from this lipase decomposition was as follows.

| glycerol tri-fatty acid ester | 53.3 wt% |
|---|---|
| glycerol di-fatty acid ester | 17.5 wt% |
| glycerol mono-fatty acid ester | 2.8 wt% |
| free fatty acid | 26.3 wt% |
| Others | 0.1 wt% |

Further added to the above product was 4 g gelatin (E1-1017, Nippi Inc.) and they were mixed to obtain the modifying agent of the present invention (example 13). The composition of this modifying agent was as follows.

| glycerol tri-fatty acid ester | 51.6 wt% |
|---|---|
| glycerol di-fatty acid ester | 17.0 wt% |
| glycerol mono-fatty acid ester | 2.7 wt% |
| free fatty acid | 25.5 wt% |
| gelatin | 3.2 wt% |
| Others | 0.0 wt% |

Example 14

10 g glycerol mono-stearic acid ester (EMALGEE-MS, Riken Vitamin Co., Ltd.) and 5 g gelatin (E1-1017, Nippi Inc.) were dissolved and separated in 1,000 ml water. 1,000 g rice polished in advance was put in this solution and dipped stirring at 30 °c for 1 hour. The rice was then frozen and dried up by a vacuum freeze drying machine. Thus the modified rice of the present invention (example 14) was obtained.

Example 15

10 g glycerol mono-stearic acid ester (EMALGEE-MS, Riken Vitamin Co., Ltd.) and 5 g gelatin (E1-1017, Nippi Inc.) were dissolved and separated in 1,000 ml water. 1,000 g rice polished in advance was put in this solution and dipped stirring at 30 °c for 1 hour. The rice was then frozen and dried up by a vacuum freeze drying machine. Thus the modified rice of the present invention (example 15) was obtained.

Comparative Example 1

1,000 g glycerol mono-stearic acid ester (EMALGEE-MS, Riken Vitamin Co., Ltd.) and 10 g gelatin (E1-1017, Nippi Inc.) were mixed to obtain a comparative modifying agent (comparative example 1).

Comparative Example 2

1,000 g glycerol mono-stearic acid ester (EMALGEE-MS, Riken Vitamin Co., Ltd.) and 3,000 g gelatin (E1-1017, Nippi Inc.) were mixed to obtain a comparative modifying agent (comparative example 2).

EXPERIMENTS

500 g polished rice soled on the market was washed well in water and dried by air for 30 min. This rice was then put in an electric rice cooker. Added to this rice were the modifying agent of example 1 of such a quantity as the fatty acid compound in the agent was 5 parts by weight with respect to the rice and further 800 g water. The rice and agent were well mixed and the rice was then boiled in the ordinary manner. Thus prepared was test sample 1 (example of boiled rice, example 16). Test samples 2 to 13 (examples of boiled rice, examples 17 to 25) and comparative samples X and Y were prepared in the same manner as test sample 1 but using the modifying agent of the present invention of examples 2 to 13 and the comparative modifying agents of comparative examples 1 and 2.

Further, test samples 14 and 15 were prepared by boiling the modified rice of the present invention of examples 14 and 15 in the ordinary manner.

Moreover, test sample 16 (example of boiled rice, example 26) was prepared in the same manner as test sample 1 but that the quantity of the modifying agent of example 1 was 3.5 g (the fatty acid compound in the agent is 2.3 parts by weight with respect to the rice).

Furthermore, comparative sample Z (comparative example 3) was prepared in the same manner as test sample 1 but using glycerol mono-stearic acid ester instead of the modifying agent of example 1.

Test samples 1 to 16 and comparative samples X, Y and Z, each 30 g, were subjected to degustation by 20 people. The result was as shown in Tables 1 to 4. These samples were also measured for the digestive efficiency by amylase and the rate of occupied amylose. Table 5 shows the result.

Table 1 (Dry texture)

| Sample No. | 1 | 2 | 3 | 4 | 5 | 6 | 7 | 8 | 9 | 10 |
|---|---|---|---|---|---|---|---|---|---|---|
| A | 2 | 3 | 5 | 3 | 0 | 5 | 7 | 5 | 3 | 3 |
| B | 5 | 6 | 8 | 8 | 5 | 7 | 3 | 4 | 5 | 9 |
| C | 13 | 11 | 7 | 9 | 15 | 8 | 10 | 11 | 12 | 8 |

| Sample No. | 11 | 12 | 13 | 14 | 15 | 16 | X | Y | Z |
|---|---|---|---|---|---|---|---|---|---|
| A | 2 | 2 | 3 | 3 | 2 | 0 | 8 | 11 | 10 |
| B | 9 | 11 | 7 | 7 | 4 | 8 | 10 | 4 | 7 |
| C | 9 | 7 | 10 | 10 | 14 | 12 | 8 | 2 | 5 |

A: Too fluffy

B: Rather fluffy

C: Not fluffy

Table 2 (Oiliness)

| Sample No. | 1 | 2 | 3 | 4 | 5 | 6 | 7 | 8 | 9 | 10 |
|---|---|---|---|---|---|---|---|---|---|---|
| D | 0 | 0 | 0 | 0 | 0 | 3 | 4 | 0 | 0 | 0 |
| E | 3 | 4 | 5 | 5 | 2 | 7 | 7 | 2 | 5 | 7 |
| F | 8 | 8 | 8 | 6 | 7 | 3 | 6 | 11 | 9 | 8 |
| G | 9 | 8 | 7 | 9 | 11 | 7 | 3 | 7 | 6 | 5 |

| Sample No. | 11 | 12 | 13 | 14 | 15 | 16 | X | Y | Z |
|---|---|---|---|---|---|---|---|---|---|
| D | 2 | 3 | 6 | 0 | 0 | 0 | 4 | 5 | 2 |
| E | 4 | 4 | 7 | 4 | 3 | 2 | 6 | 5 | 7 |
| F | 3 | 4 | 6 | 8 | 9 | 5 | 6 | 6 | 8 |
| G | 11 | 9 | 1 | 8 | 8 | 13 | 4 | 4 | 3 |

D: Felt strongly and offensive.

E: Felt slightly and offensive.

F: Felt slightly but not offensive.

G: Not felt.

EP 0 473 185 A1

Table 3 (Unnatural Taste)

| Sample No. | 1 | 2 | 3 | 4 | 5 | 6 | 7 | 8 | 9 | 10 |
|---|---|---|---|---|---|---|---|---|---|---|
| H | 0 | 0 | 0 | 0 | 0 | 3 | 4 | 0 | 2 | 1 |
| I | 2 | 4 | 5 | 5 | 2 | 7 | 7 | 3 | 9 | 5 |
| J | 9 | 8 | 8 | 6 | 7 | 3 | 6 | 7 | 5 | 9 |
| K | 9 | 8 | 7 | 9 | 11 | 7 | 3 | 10 | 4 | 5 |

| Sample No. | 11 | 12 | 13 | 14 | 15 | 16 | X | Y | Z |
|---|---|---|---|---|---|---|---|---|---|
| H | 0 | 1 | 4 | 0 | 0 | 0 | 4 | 5 | 7 |
| I | 2 | 1 | 8 | 4 | 3 | 2 | 6 | 5 | 7 |
| J | 10 | 6 | 4 | 8 | 8 | 4 | 6 | 6 | 4 |
| K | 8 | 12 | 4 | 8 | 9 | 14 | 4 | 4 | 2 |

H:  Felt strongly and offensive.
I:  Felt slightly and offensive.
J:  Felt slightly but not offensive.
K:  Not felt.

Table 4 (Taste)

| Sample No. | 1 | 2 | 3 | 4 | 5 | 6 | 7 | 8 | 9 | 10 |
|---|---|---|---|---|---|---|---|---|---|---|
| L | 1 | 0 | 0 | 1 | 3 | 0 | 0 | 2 | 0 | 0 |
| M | 7 | 6 | 7 | 4 | 4 | 4 | 5 | 7 | 6 | 9 |
| N | 10 | 12 | 9 | 9 | 9 | 10 | 7 | 8 | 9 | 7 |
| O | 2 | 2 | 3 | 4 | 4 | 5 | 5 | 3 | 3 | 4 |
| P | 0 | 0 | 1 | 2 | 0 | 1 | 3 | 0 | 2 | 0 |

| Sample No. | 11 | 12 | 13 | 14 | 15 | 16 | X | Y | Z |
|---|---|---|---|---|---|---|---|---|---|
| L | 0 | 0 | 0 | 0 | 1 | 0 | 0 | 0 | 0 |
| M | 5 | 5 | 3 | 9 | 5 | 4 | 2 | 4 | 2 |
| N | 8 | 5 | 4 | 7 | 8 | 6 | 5 | 6 | 6 |
| O | 5 | 7 | 8 | 4 | 6 | 7 | 9 | 7 | 3 |
| P | 2 | 3 | 5 | 0 | 0 | 3 | 4 | 3 | 9 |

L: Good
M: Rather good
N: Ordinary
O: Rather bad
P: Bad

EP 0 473 185 A1

Table 5

| Sample No. | 1 | 2 | 3 | 4 | 5 | 6 | 7 |
|---|---|---|---|---|---|---|---|
| Rate of occupied amylose | 83.7 | 88.2 | 82.1 | 78.3 | 89.1 | 78.9 | 77.7 |
| Digestive efficiency by amylase | 81.5 | 85.2 | 81.8 | 86.1 | 82.7 | 88.5 | 90.3 |

| Sample No. | 8 | 9 | 10 | 11 | 12 | 13 | 14 |
|---|---|---|---|---|---|---|---|
| Rate of occupied amylose | 77.6 | 84.4 | 82.1 | 84.0 | 82.0 | 83.3 | 80.7 |
| Digestive efficiency by amylase | 86.4 | 85.3 | 86.9 | 81.6 | 87.8 | 81.6 | 88.4 |

| Sample No. | 15 | 16 | X | Y | Z |
|---|---|---|---|---|---|
| Rate of occupied amylose | 81.1 | 84.8 | 86.3 | 82.1 | 85.0 |
| Digestive efficiency by amylase | 87.7 | 80.7 | 81.5 | 86.2 | 87.5 |

The rate of occupied amylose and the digestive efficiency by amylase were measured by the following methods.

Rate of Occupied Amylose

0.5 N potassium hydroxide 20 ml was added to 0.1 g measurement sample taken from each of the above samples and stirred until the rice pieces completely disappeared to alkali gelatinize the sample. Added to this sample liquid were 150 ml purified water and then 1 N hydrochloric acid 20 ml to neutralize the liquid, increasing the total volume of the liquid to 190 ml. While cooling 95 ml of the thus prepared sample liquid by ice, 0.4 N potassium iodate was added to the sample liquid and the sample liquid was then titrated with 0.00157 N potassium iodate at 0.5 ml per minute, monitoring the electric current under 25 mV of voltage applied. The titration value when the current increased abruptly was measured. On the other hand, the total amount of sugar in the same sample of 0.1 g was separately measured by the phenol-sulfuric acid method. Using the titration value and the total amount of sugar, the iodine affinity of the sample and then the rate of occupied amylose were calculated by the following equations.

$$\text{Affinity for iodine (Iodine mg/Total amount of sugar 100 mg)} = \frac{\text{titration value (ml) x 20 x 100}}{\text{Total amount of sugar (mg)}}$$

13

Rate of occupied amylose (%) =

$$\frac{\text{Affinity of unprocessed starchy material for iodine} - \text{Affinity of processed starchy material for iodine}}{\text{Affinity of unprocessed starchy material for iodine}} \times 100$$

Digestive Efficiency by Porcine Pancreasa α-Amylase (PPA)

50 mM phosphoric acid buffer solution (pH 6.9) 49 ml was added to 0.5 g measurement sample taken from each of the above sample and this sample liquid was left in a shaking thermostat controlled at 37 ° c for 30 min. Added to the sample liquid was 1 ml of the enzyme liquid prepared by diluting PPA (Sigma Inc.) with a phosphoric acid buffer solution to 50 μU/ml to cause reaction. The reacting liquid, by 0.2 ml, was put into two test tubes with 0.1 N sodium hydroxide 3.8 ml in each, at 0 min, 20 min, 40 min and 60 min after the reaction started, to deactivate the enzyme and hence stop the enzyme reaction. Determination of the quantity of the reducing sugar resulted from the digestion by PPA was carried out by the Somogei-Nelson method. When gelatinizing the samples in advance, the gelatinization was carried out by adding phosphoric acid buffer to the samples and heating them in a boiling hot-water bath for 30 min.

The first boiled rice modifying agent of the present invention comprises at least an edible amphipatic fatty acid compound and an edible moisture-retaining substance in the ratio of the fatty acid compound to the moisture-retaining substance of 100 : 10-200 by weight, and thereby has following effects. The edible fatty acid compound in it binds the rice and slows down the digestion and absorption of rice. The edible moisture-retaining substance in it masks the fatty acid compound bound the rice and diminishes the deterioration of the taste caused by the addition of a fatty acid compound. Further, the edible moisture-retaining substance retains moderate moisture and reduces fluffiness due to the addition of a fatty acid compound.

The second boiled rice modifying agent of the present invention comprises at least an edible amphipatic fatty acid compound, an edible moisture-retaining substance and glycerol tri-fatty acid ester in the ratio of the amphipatic fatty acid compound to the edible moisture-retaining substance to the glycerol tri-fatty acid ester of 100 : 10-200 : 3-3,000 by weight, and thereby can improve the taste of the boiled rice better than the first modifying agent due to the addition of glycerol tri-fatty acid ester.

The first boiled rice of the present invention comprises gelatinized grains, at least an edible amphipatic fatty acid compound bound the grains and at least an edible moisture-retaining substance adhered to the grains bound by the fatty acid compound, and thereby has the following effects. It is more slowly digested and absorbed. The deterioration of the flavor, feeling and increase of the fluffiness due to a glycerol mono-fatty acid ester can be diminished. It can be eaten as usual, prevent and cure obesity, and prevent an abrupt rise of blood sugar after ingestion.

The second boiled rice of the present invention comprises gelatinized grains, at least an edible amphipatic fatty acid compound bound the grains and at least an edible moisture-retaining substance and glycerol fatty acid ester adhered to the grains bound by the fatty acid compound, and thereby has a better taste than the first boiled rice due to the glycerol fatty acid ester adhered to the boiled rice.

The first modified rice of the present invention comprises grains, at least an edible amphipatic fatty acid compound and at least an edible moisture-retaining substance adhered to the grains, and thereby has the following effects. The boiled rice made of this modified rice is more slowly digested and absorbed. The deterioration of the taste, texture and increase of the fluffiness due to a glycerol mono-fatty acid ester can be diminished. It can be cooked in the ordinary manner, prevent and cure obesity, and prevent an abrupt rise of blood sugar after ingestion.

The second modified rice of the present invention comprises grains, at least an edible amphipatic fatty acid compound and at least an edible moisture-retaining substance and glycerol tri-fatty acid ester adhered to the grains, and thereby the boiled rice made of this modified rice, with glycerol tri-fatty acid ester further adhered to the first modified rice, has a better flavor than that made of the first boiled rice.

The method of the present invention for cooking the modified rice heats 100 parts by weight of rice, 50-1,000 parts by weight of water, and the modifying agent of such a quantity as the amphipatic fatty acid compound in the modifying agent is 0.1-5 parts by weight, above such a temperature as the amphipatic

14

fatty acid compound in the modifying agent binds the rice, and thereby can prepare simply and easily the boiled rice which has the advantages described above.

**Claims**

1. A boiled rice modifying agent comprising at least an edible amphipatic fatty acid compound and an edible moisture-retaining substance, the ratio of the fatty acid compound to the moisture-retaining substance being 100 : 10-200 by weight.

2. A boiled rice modifying agent (as defined) in claim 1, in which said edible amphipatic fatty acid compound is at least one compound from the group consisting of glycerol fatty acid ester, sorbitan fatty acid ester and phospholipid.

3. A boiled rice modifying agent (as defined) in claim 1, in which said edible moisture-retaining substance is at least one substance selected from the group consisting of gelatin, collagen, dextrin, starch binders, guaiac gum, xanthene gum, locust bean gum, pectin, carrageenin, alginic acid and agar.

4. A boiled rice modifying agent (as defined) in claim 1, in which said modifying agent further includes glycerol tri-fatty acid ester and the ratio of said amphipatic fatty acid compound to said edible moisture-retaining substance to the glycerol tri-fatty acid ester is 100 : 10-200 : 3-3,000 by weight.

5. A boiled rice modifying agent (as defined) in claim 4, in which said glycerol tri-fatty acid ester is edible fat and oil.

6. A boiled rice modifying agent (as defined) in claim 5, in which said edible fat and oil is at least one edible fat and oil selected from the group consisting of olive oil, coconut oil, rapeseed oil, corn oil, soybean oil, rice bran oil, rice oil, safflower oil, sunflower oil, wheat germ oil and palm oil.

7. A boiled rice comprising gelatinized grains, at least an edible amphipatic fatty acid compound bound to said grains and at least an edible moisture-retaining substance adhered to said grains bound by the fatty acid compound.

8. A boiled rice (as defined) in claim 7, in which said edible moisture-retaining substance is at least one substance selected from the group consisting of gelatin, collagen, dextrin, starch binders, guaiac gum, xanthene gum, locust bean gum, pectin, carrageenin, alginic acid and agar.

9. A boiled rice (as defined) in claim 7, in which the ratio of said fatty acid compound to said moisture-retaining substance is 100 : 10-200 by weight.

10. A boiled rice (as defined) in claim 7, in which further glycerol tri-fatty acid ester is adhered to said grains bound by the fatty acid compound.

11. A boiled rice (as defined) in claim 10, in which the ratio of said fatty acid compound to said moisture-retaining substance to said glycerol tri-fatty acid ester is 100 : 10-200 : 3-3,000 by weight.

12. A boiled rice (as defined) in claim 7, in which the rate of amylose occupied by said amphipatic fatty acid compound is greater than 10%.

13. A boiled rice (as defined) in claim 7, in which the rate of amylose occupied by said amphipatic fatty acid compound is 40-95%.

14. A modified rice comprising grains, at least an edible amphipatic fatty acid compound adhered to said grains and at least an edible moisture-retaining substance adhered to said grains.

15. A modified rice of claim 14, in which said edible moisture-retaining substance is at least one substance selected from the group consisting of gelatin, collagen, dextrin, starch binders, guaiac gum, xanthene gum, locust bean gum, pectin, carrageenin, alginic acid and agar.

**16.** A modified rice (as defined) in claim 14, in which the ratio of said fatty acid compound to said moisture-retaining substance is 100 : 10-200 by weight.

**17.** A modified rice (as defined) in claim 14, in which further glycerol tri-fatty acid ester is adhered to said grains.

**18.** A modified rice (as defined) in claim 17, in which the ratio of said fatty acid compound to said moisture-retaining substance to said glycerol tri-fatty acid ester is 100 : 10-200 : 3-3,000 by weight.

**19.** A method of cooking slowly digested and absorbed rice characterized by heating 100 parts by weight of rice, 50-1,000 parts by weight of water, and the modifying agent comprising at least an edible amphipatic fatty acid compound and an edible moisture-retaining substance in the ratio of 100 : 10-200 by weight of such a quantity as the amphipatic fatty acid compound in the modifying agent is 0.1-5 parts by weight, above such a temperature as the amphipatic fatty acid compound in the modifying agent binds the rice.

**20.** A method of cooking slowly digested and absorbed rice (as defined) in claim 19, in which said edible amphipatic fatty acid compound is at least one substance selected from the group consisting of glycerol fatty acid ester, sorbitan fatty acid ester and phospholipid.

**21.** A method of cooking slowly digested and absorbed rice (as defined) in claim 19, in which said edible moisture-retaining substance is at least one substance selected from the group consisting of gelatin, collagen, dextrin, starch binders, guaiac gum, xanthene gum, locust bean gum, pectin, carrageenin, alginic acid, agar or their mixture.

**22.** A method of cooking slowly digested and absorbed rice (as defined) in claim 19, in which said modifying agent further includes glycerol tri-fatty acid ester and the ratio of said fatty acid compound to said moisture-retaining substance to the glycerol tri-fatty acid ester is 100 : 10-200 : 3-3,000 by weight.

**23.** A method of cooking slowly digested and absorbed rice (as defined) in claim 22, in which said glycerol tri-fatty acid ester is edible fat and oil.

**24.** A method of cooking slowly digested and absorbed rice (as defined) in claim 23, in which said edible fat and oil is at least one edible fat and oil selected from the group consisting of olive oil, coconut oil, rapeseed oil, corn oil, soybean oil, rice bran oil, rice oil, safflower oil, sunflower oil, wheat germ oil and palm oil.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3961087 (HAROLD W. ZUKERMAN)<br>* column 2, lines 23 - 48 *<br>* column 4, lines 20 - 29 *<br>* column 4, lines 46 - 61 *<br>--- | 1-24 | A23L1/182<br>A23L1/10 |
| X | US-A-4764390 (HAROLD W. ZUKERMAN ET AL.)<br>* column 2, line 40 - column 3, line 19 *<br>* column 4, lines 12 - 15 *<br>* column 6, lines 40 - 50 *<br>--- | 1-24 | |
| X | DATA BASE WPI/DERWENT  AN=66-41172F<00> DW=6800<br>Derwent Publications Ltd., London, GB.<br>& JP-B-44027701 <TAIYO YUSHI KK><br>* the whole document *<br>--- | 1-24 | |
| X | DATA BASE WPIL/DERWENT  AN=89-306329<42> DW=8942<br>Derwent Publications Ltd., London, GB.<br>& JP-A-1228434 <SATAKE SEISAKUSHO KK> <12.09.89><br>* the whole document *<br>--- | 1-3,<br>7-9,<br>14-16,<br>19-21 | |
| X | PATENT ABSTRACTS OF JAPAN<br>vol. 13, no. 399 (C-632)(3747) 05 September 1989,<br>& JP-A-1 141564 (SATAKE ENG. CO. LTD.) 02 June 1989,<br>* the whole document *<br>--- | 1-3,<br>7-9,<br>14-16,<br>19-21 | TECHNICAL FIELDS SEARCHED (Int. Cl.5 )<br><br>A23L<br>A21D |
| A | DATA BASE WPIL/DERWENT  AN=85-103105<17> DW=8517<br>Derwent Publications Ltd., London, GB.<br>& JP-A-60049754 <AJINOMOTO KK> <19-03-85><br>* the whole document *<br>----- | 1-2,<br>5-7,<br>10-11,<br>17-20 | |

The present search report has been drawn up for all claims

| Place of search | Date of completion of the search | Examiner |
|---|---|---|
| BERLIN | 17 OCTOBER 1991 | ALVAREZ ALVAREZ C. |

EPO FORM 1503 03.82 (P0401)